# FASCICULE DE BREVET EUROPEEN

(11) **EP 1 991 097 B1**
(45) Date de publication et mention de la délivrance du brevet: **02.06.2010**
(21) Numéro de dépôt: 07731036.5
(22) Date de dépôt: 23.02.2007
(51) Int. Cl.: A47J 45/06

(54) **DISPOSITIF DE PREHENSION POUR USTENSILE CULINAIRE**
HALTERUNG FÜR EIN KÜCHENUTENSIL
HOLDER FOR CULINARY UTENSIL

(30) Priorité: 06.03.2006 FR 0601985
(43) Date de publication de la demande: 19.11.2008
(73) Titulaire: SEB SA, 69130 Ecully (FR)
(72) Inventeur: COUDURIER, Olivier, FR-74370 Pringy (FR)
(74) Mandataire: Lemoine, Jean-Sébastien
(86) Numéro de dépôt international: PCT/FR2007/000331
(87) Numéro de publication internationale: WO 2007/101926

(56) Documents cités:
- EP-B1- 0 809 962

## Description

La présente invention concerne un dispositif de préhension pour ustensile culinaire avec poignée rotative.

On connaît un dispositif de préhension du type, comprenant, d'une part, un socle qui est adapté à être fixé à un article culinaire, et qui comprend au moins un organe de positionnement d'utilisation et un arbre de rotation s'étendant selon un axe de rotation, et, d'autre part, une poignée qui comprend un corps ayant une ouverture coopérant avec l'arbre de rotation de façon à permettre la rotation de la poignée selon l'axe de rotation entre une position d'utilisation et au moins une position de rangement, et un verrou monté mobile sur le corps entre une position de verrouillage dans laquelle il coopère avec l'organe de positionnement d'utilisation de façon à immobiliser la poignée dans sa position d'utilisation, et une position de libération dans laquelle il permet la rotation de la poignée. Un dispositif de préhension représentant l'art intérieur est décrit dans le document EP0809962 A1.

Cependant, les organes de positionnement d'utilisation sont souvent disposés dans des endroits imposant des contraintes à l'esthétisme du.dispositif de préhension.

Selon l'invention, l'organe de positionnement d'utilisation est porté par l'arbre de rotation. De ce fait, il est très facile de cacher cet organe du fait de la faible course qu'il parcoure quand la poignée pivote, même pour des amplitudes angulaires importantes.

D'autres particularités et avantages de la présente invention apparaîtront dans la description du mode de réalisation donné à titre d'exemple non limitatif et illustré aux dessins dans lesquels :
La figure 1 est une vue en perspective éclatée d'un dispositif de préhension conforme au mode de réalisation de la présente invention, et
La figure 2 est une vue en coupe de la partie du dispositif de préhension adjacente à l'axe de rotation.

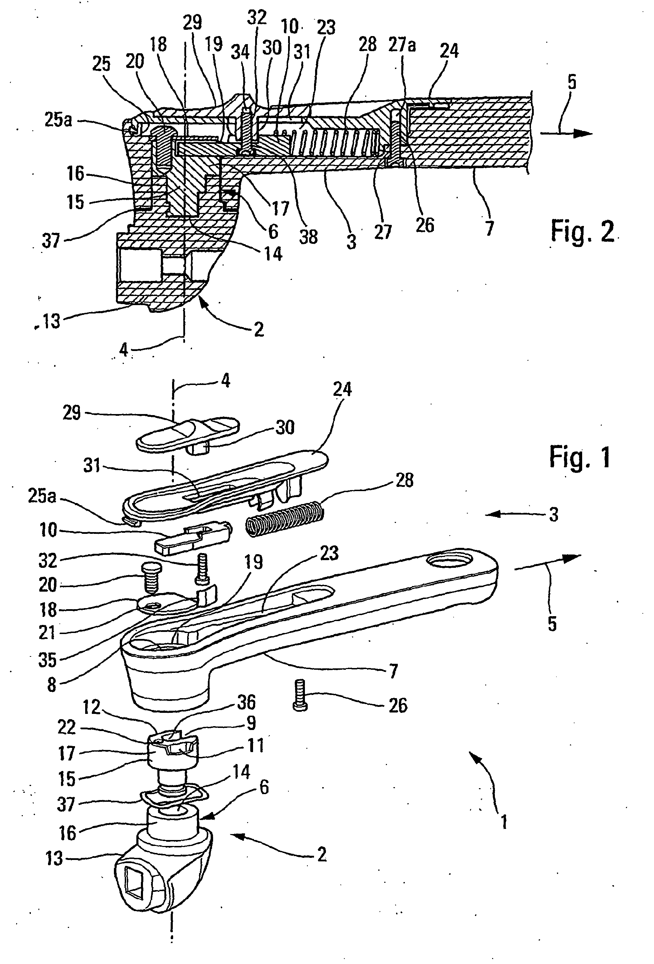

De façon classique, un ustensile culinaire tel qu'une casserole ou une sauteuse comprend un récipient et un dispositif de préhension 1. Comme on peut le voir aux figures 1 et 2, le dispositif de préhension 1 conforme à la présente invention comprend, d'une part, un socle 2 qui est adapté à être fixé à un récipient d'article culinaire, et d'autre part, une poignée 3 qui est montée de façon pivotante par rapport au socle 2 selon un axe de rotation 4 et qui s'étend principalement selon une direction longitudinale 5 perpendiculaire à l'axe de rotation 4.

Le socle 2 comprend un arbre de rotation 6 s'étendant selon l'axe de rotation 4 et faisant saillie sur une face supérieure du socle 2 quand il est fixé au récipient de sorte que la rotation de la poignée se fasse selon un plan horizontal quand l'ustensile culinaire est convenablement disposé sur une surface de travail. De préférence, afin d'avoir un gain de place en hauteur lorsque plusieurs ustensiles culinaires sont empilés les uns dans les autres, le dispositif de préhension 1 est conformé de sorte que les parois de fond des récipients empilés restent parallèles les uns des autres, et ceci, quelle que soit la position de la poignée.

La poignée 3 comprend un corps 7 formant l'essentiel de la poignée 3 et possédant une ouverture 8 qui coopère avec l'arbre de rotation 4 de façon à permettre la rotation de la poignée 3 entre une position d'utilisation dans laquelle, quand le dispositif de préhension 1 est fixé à la paroi latérale d'un récipient, elle s'étend perpendiculairement à cette paroi, et au moins une position de rangement (en l'occurrence deux, selon le sens de rotation utilisé pour la déplacer depuis sa position d'utilisation) dans laquelle, quand le dispositif de préhension 1 est fixé à la paroi latérale, de préférence, elle s'étend de façon sensiblement tangentielle à cette dernière. Ainsi, en position de rangement, l'encombrement de l'ustensile culinaire est particulièrement restreint.

En outre, le socle 2 comprend un organe de positionnement d'utilisation 9 et la poignée 3 comprend un verrou 10 qui est monté mobile sur le corps 7 entre une position de verrouillage dans laquelle il coopère avec l'organe de positionnement d'utilisation 9 de façon à immobiliser la poignée 3 dans sa position d'utilisation, et une position de libération dans laquelle il permet la libre rotation de la poignée 3. En l'occurrence, l'organe de positionnement d'utilisation 9 est formé par une cavité de positionnement d'utilisation 9 dans laquelle le verrou 10 pénètre quand il est en position de verrouillage (et quand la poignée 3 est dans sa position d'utilisation). Dans la présente invention, l'organe de positionnement d'utilisation 9 est porté par l'arbre de rotation 6, et plus précisément, dans le présent mode de réalisation, la cavité de positionnement d'utilisation 9 est réalisée dans l'arbre de rotation 6.

Par ailleurs, l'arbre de rotation 6 porte au moins un organe de positionnement additionnel 11,12 (en l'occurrence deux disposés symétriquement par rapport à l'organe de positionnement d'utilisation 9) avec lequel le verrou 10 est adapté à coopérer quand il est dans sa position de verrouillage de façon à immobiliser la poignée 3 dans sa position de rangement correspondante. Dans le présent mode de réalisation, chaque organe de positionnement additionnel 11,12 est formé par une cavité de positionnement additionnelle 11,12 réalisée également dans l'arbre de rotation 6. Il est à noter que la profondeur des deux cavités de positionnement additionnelle 11,12 est nettement inférieure à celle de la cavité de positionnement d'utilisation 9 afin de pouvoir réaliser les trois cavités 9,11,12 dans l'arbre de rotation 6 et vu le degré de sureté devant être apporté à la stabilité de la poignée 3 quand l'ustensile culinaire est utilisé.

Dans le présent mode de réalisation, le socle 2 comprend, d'une part, une embase 13 (en général moulé en thermodur) qui est adaptée à être fixée au récipient et dans laquelle est réalisé un logement 14, et, d'autre part, un dispositif de positionnement 15 (en général métallique) qui est fixé dans le logement 14 et qui porte les organes de positionnement 9,11,12. L'arbre de rotation 6 est formé, d'une part, par une collerette 16 cylindrique qui est portée par l'embase et qui définie le logement 14, et, d'autre part, par un épaulement 17 qui est porté par le dispositif de positionnement 15 et qui est porté et prolonge la collerette 16. Les organe de positionnement 9,11,12 sont réalisés à la périphérie extérieure de l'épaulement 17 afin d'être accessible depuis l'extérieur du socle 2 par le verrou 10.

L'ouverture 8 du corps 7 a une extrémité axiale obstruée par un élément de butée 18 qui prend appui contre l'extrémité libre de l'arbre de rotation 6 afin d'empêcher tout déplacement axial de la poignée 3 par rapport au socle 2. Dans le présent mode de réalisation, l'élément de butée 18 est formé par une plaque 18 qui prend également appui contre un épaulement annulaire 19 réalisé dans l'ouverture 8 et qui est fixée au socle 2 par une vis 20 traversant un perçage 21 réalisé dans la plaque 18 et pénétrant dans un orifice fileté 22 réalisé dans le socle 2 (et plus précisément, dans le dispositif de positionnement 15). Les formes de la plaque 18 et de l'épaulement annulaire 19 permettent la rotation de l'une par rapport à l'autre quand la poignée 3 est pivotée.

Le verrou 10 est monté coulissant en translation selon la direction longitudinale 5. Il est logé dans une rainure 23 qui est réalisée dans le corps 7 et qui débouche dans l'ouverture 8. La rainure 23 est couverte par un capot 24 fixé au corps 7. En l'occurrence, cette fixation est réalisée, d'une part, par une patte 25 qui est portée par le capot 24 et qui est adapté à être emmanché dans un logement 25 réalisé dans le corps 7, et, d'autre part, par une vis 26 traversant un perçage 27 réalisé dans le corps 7 et pénétrant un orifice fileté 28 réalisé dans le capot 24.

Dans le présent mode de réalisation, pour améliorer la sureté du verrouillage de la poignée 3 dans sa position d'utilisation, le verrou 10 est sollicité dans sa position de verrouillage par un ressort de verrouillage 28. Ce dernier est disposé dans la rainure 23 et prend appui contre le corps 7 et le verrou 10.

Etant donné que le verrou 10 est disposé dans une rainure 23 recouverte par un capot 24, afin de pouvoir l'entraîner facilement dans sa position de déverrouillage, la poignée 3 comprend un bouton de commande manuelle 29 qui est accessible depuis l'extérieur de la poignée 3. Le bouton de commande manuelle 29 est relié au verrou 10 par un tenon 30 qui traverse une fente 31 réalisée dans le capot 24, et il y est fixé par une vis 32 qui traverse un perçage 33 réalisé dans le verrou 10 et qui pénètre un orifice fileté 34 réalisé dans le tenon 30 porté par le bouton de commande manuelle 29.

Afin de minimiser, voir empêcher, tout jeu de rotation de la poignée 3 par rapport au socle 2 du fait d'une différence de largeurs entre le verrou 10 et les différentes cavités de positionnement 9,11,12, un ressort de blocage 35 (en l'occurrence un ressort à lame 35 disposé sans la rainure 23 et prenant appui contre le corps 7 et le verrou 10) sollicite le verrou 10 à venir en butée contre une surface radiale 36 de l'organe de positionnement 9,11,12 quand, en position de verrouillage, il coopère avec cet organe. La largeur du verrou 10 (ou d'une cavité 9,11,12) est la distance séparant les deux surfaces longitudinales du verrou 10 (les deux surfaces radiales de la cavité 9,11,12).

Par ailleurs, le dispositif de préhension 1 comprend une rondelle de glissement élastique 37 (ondulée, en inox) qui est disposée autour de l'arbre de rotation 6, repose sur l'épaulement situé à la base de la collerette 16, et sur laquelle la poignée 3 vient en appui.

Un utilisateur voulant faire pivoter la poignée 3 déplace le bouton de commande manuelle 29 dans le sens du déverrouillage du verrou 10 (ici, en l'éloignant du récipient) et fait pivoter la poignée 3. Une fois le bouton de commande 29 relâché, le verrou 10 vient en butée contre l'arbre de rotation 6 et, quand la poignée 3 se trouve dans l'une de ses positions verrouillables, il pénètre dans la cavité correspondante afin d'immobiliser cette dernière.

Evidement, la présente invention n'est pas limitée au mode de réalisation venant d'être décrit, l'étendue de la protection de l'invention restant définie par les revendications.

## Revendications

1. Dispositif de préhension (1), comprenant, d'une part, un socle (2) qui est adapté à être fixé à un article culinaire, et qui comprend un organe de positionnement d'utilisation (9) et un arbre de rotation (6) s'étendant selon un axe de rotation (4), et, d'autre part, une poignée (3) qui comprend un corps (7) ayant une ouverture (8) coopérant avec l'arbre de rotation (6) de façon à permettre la rotation de la poignée (3) selon l'axe de rotation (4) entre une position d'utilisation et au moins une position de rangement, et un verrou (10) monté mobile sur le corps (7) entre une position de verrouillage dans laquelle il coopère avec l'organe de positionnement d'utilisation (9) de façon à immobiliser la poignée (3) dans sa position d'utilisation, et une position de libération dans laquelle il permet la rotation de la poignée (3), **caractérisé en ce que** l'organe de positionnement d'utilisation (9) est porté par l'arbre de rotation (6).

2. Dispositif de préhension (1) selon la revendication 1, **caractérisé en ce que** l'arbre de rotation (6) fait saillie sur une face supérieure du socle (2) quand il est fixé au récipient.

3. Dispositif de préhension (1) selon la revendication 1 ou 2, **caractérisé en ce que** l'organe de positionnement d'utilisation (9) est formé par une cavité (9) réalisée dans l'arbre de rotation (6) dans laquelle le verrou (10) est adapté à pénétrer quand il est en position de verrouillage.

4. Dispositif de préhension (1) selon l'une des revendications 1 à 3, **caractérisé en ce que** l'arbre de rotation (6) porte au moins un organe de positionnement additionnel (11,12) avec lequel le verrou (10) est adapté à coopérer quand il est dans sa position de verrouillage de façon à immobiliser la poignée (3) dans une position correspondante.

5. Dispositif de préhension (1) selon l'une des revendications 1 à 4, **caractérisé en ce que** le verrou (10) est monté coulissant selon la direction longitudinale (5) du corps (7).

6. Dispositif de préhension (1) selon l'une des revendications 1 à 5, **caractérisé en ce que** le verrou (10) est sollicité dans sa position de verrouillage par un ressort de verrouillage (28).

7. Dispositif de préhension (1) selon l'une des revendications 1 à 6, **caractérisé en ce que** le verrou (10), en position de verrouillage, est sollicité à prendre appui contre une surface radiale (36) de l'organe de positionnement (9,11,12) correspondant par un ressort de blocage (35) afin de limiter le jeu de rotation entre la poignée (3) et le socle (2).

8. Dispositif de préhension (1) selon l'une des revendications 1 à 7, **caractérisé en ce que** le verrou (10) est logé dans une rainure (23) réalisée dans le corps (7) et débouchant dans l'ouverture (8).

9. Dispositif de préhension (1) selon la revendication 8, **caractérisé en ce que** la rainure (23) est fermée par un capot (24) dans laquelle est réalisée une fente (31) traversée par un tenon (30) solidarisant le verrou (10) à un bouton de commande manuelle (29).

## Claims

1. Holder (1) comprising, on the one hand, a stand (2) that is adapted to be fixed onto a culinary accessory, which comprises a use positioning member (9) and a rotary shaft (6) extending according to an axis of rotation (4), and, on the other hand, a handle (3) which comprises a body (7) with an opening (8) that engages with the rotary shaft (6) so as to permit the rotation of the handle (3) according to the axis of rotation (4) between a use position and at least one storage position, and a lock (10) that is mounted mobile on the body (7) between a locking position in which it engages with the use positioning member (9) so as to immobilise the handle (3) in its use position and a releasing position in which it allows the handle (3) to rotate, **characterised in that** the use positioning member (9) is held by the rotary shaft (6).

2. Holder (1) according to claim 1, **characterised in that** the rotary shaft (6) protrudes onto an upper face of the stand (2) when it is fixed to the recipient.

3. Holder (1) according to claims 1 or 2, **characterised in that** the positioning member (9) is formed by a cavity (9) in the rotary shaft (6) in which the lock (10) is adapted to penetrate when it is in the locking position.

4. Holder (1) according to any of claims 1 to 3,
**characterised in that** the rotary shaft (6) holds at least one additional positioning member (11, 12) with which the lock (10) is adapted to engage when it is in the locking position so as to immobilise the handle (3) in a corresponding storage position.

5. Holder (1) according to any of claims 1 to 4,
**characterised in that** the lock (10) is mounted so that it slides in translation according to the longitudinal direction (5) of the body (7).

6. Holder (1) according to any of claims 1 to 5,
**characterised in that** the lock (10) is solicited in its locking position by a locking spring (28).

7. Holder (1) according to any of claims 1 to 6,
**characterised in that** the lock (10) is solicited in the locking position to come against a radial surface (36) of the corresponding positioning member (9, 11, 12) by a locking spring (35) in order to limit the rotation between the handle (3) and the stand (2).

8. Holder (1) according to any of claims 1 to 7,
**characterised in that** the lock (10) is housed in a groove (23) in the body (7) which opens into the opening (8).

9. Holder (1) according to any of claims 1 to 8,
**characterised in that** the groove (23) is sealed by a cover (24) in which a slot (31) is made though which a tenon (30) passes which attaches the lock (10) to a manual control button (29).

## Patentansprüche

1. Greifvorrichtung (1) mit einerseits einem Sockel (2), der so ausgelegt ist, dass dieser an einem Kochartikel festgelegt werden kann, und der eine Gebrauchspositioniereinrichtung (9) und eine sich entlang einer Drehachse (4) erstreckende Welle (6) umfasst, und andererseits einem Griff (3), der aufweist einen Körper (7) mit einer Öffnung (8), die mit der Welle (6) derart zusammenwirkt, dass eine Drehung des Griffs (3) um die Drehachse (4) zwischen einer Gebrauchsposition und wenigstens einer Lagerungsposition ermöglicht wird, und einen Riegel (10), der auf dem Körper (7) beweglich zwischen einer Verriegelungsposition, in welcher dieser mit der Gebrauchspositioniereinrichtung (9) zusammenwirkt, um so den Griff (3) in seiner Gebrauchsposition festzulegen, und einer Freigabeposition, in welcher dieser die Drehung des Griffs (3) erlaubt, angebracht ist, **dadurch gekennzeichnet, dass** die Gebrauchspositioniereinrichtung (9) von der Welle (6) getragen wird.

2. Greifvorrichtung (1) nach Anspruch 1, **dadurch gekennzeichnet, dass** die Welle (6) über eine Oberfläche des Sockels (2) vorsteht, wenn dieser an dem Behälter festgelegt ist.

3. Greifvorrichtung (1) nach Anspruch 1 oder 2, **dadurch gekennzeichnet, dass** die Gebrauchspositioniereinrichtung (9) durch einen Hohlraum (9) gebildet wird, der in der Welle (6) ausgebildet ist, in welchen der Riegel (10) eindringen kann, wenn sich dieser in der Verriegelungsposition befindet.

4. Greifvorrichtung (1) nach einem der Ansprüche 1 bis 3, **dadurch gekennzeichnet, dass** die Welle (6) wenigstens eine zusätzliche Positioniereinrichtung (11, 12) trägt, mit welcher der Riegel (10) zusammenwirken kann, wenn sich dieser in seiner Verriegelungsposition befindet, um so den Griff (3) in einer korrespondierenden Position festzulegen.

5. Greifvorrichtung (1) nach einem der Ansprüche 1 bis 4, **dadurch gekennzeichnet, dass** der Riegel (10) in der Längsrichtung (5) des Körpers (7) verschiebbar angebracht ist.

6. Greifvorrichtung (1) nach einem der Ansprüche 1 bis 5, **dadurch gekennzeichnet, dass** der Riegel (10) in seiner Verriegelungsposition gegenüber einer Verriegelungsfeder (28) vorgespannt ist.

7. Greifvorrichtung (1) nach einem der Ansprüche 1 bis 6, **dadurch gekennzeichnet, dass** der Riegel (10) in der Verriegelungsposition durch eine Blockierfeder (35) so vorgespannt ist, dass dieser an einer radialen Oberfläche (36) der korrespondierenden Positioniereinrichtung (9, 11, 12) anschlägt, um das Spiel der Drehung zwischen dem Griff (3) und dem Sockel (2) zu begrenzen.

8. Greifvorrichtung (1) nach einem der Ansprüche 1 bis 7, **dadurch gekennzeichnet, dass** der Riegel (10) in einer in dem Körper (7) ausgebildeten und in der Öffnung (8) mündenden Vertiefung (23) aufgenommen ist.

9. Greifvorrichtung (1) nach Anspruch 8, **dadurch gekennzeichnet, dass** die Vertiefung (23) durch einen Deckel (24) verschlossen ist, in welchem eine Schlitz (31) ausgebildet ist, der von einer Nase (30) durchquert wird, die den Riegel (10) mit einem Handsteuerknopf (29) fest verbindet.
